# EUROPEAN PATENT APPLICATION

(11) **EP 4 644 727 A2**
(43) Date of publication of application: **05.11.2025**
(21) Application number: 24738512.3
(22) Date of filing: 03.01.2024
(51) Int. Cl.: F16F 15/28

(54) **COUNTERWEIGHT ASSEMBLY, PIPING SYSTEM AND AIR CONDITIONER**

(30) Priority: 05.01.2023 CN 202320051242 U
(71) Applicant: GD Midea Heating & Ventilating Equipment Co., Ltd., Foshan, Guangdong 528311 (CN); Midea Group Co., Ltd., Foshan, Guangdong 528311 (CN)
(72) Inventor: ZHONG, Min, Foshan, Guangdong 528311 (CN); GUO, Jun, Foshan, Guangdong 528311 (CN); ZHI, Kaiyun, Foshan, Guangdong 528311 (CN); WU, Yandong, Foshan, Guangdong 528311 (CN); ZHANG, Tiegang, Foshan, Guangdong 528311 (CN); ZHOU, Baisong, Foshan, Guangdong 528311 (CN)
(74) Representative: RGTH
(86) International application number: PCT/CN2024/070471
(87) International publication number: WO 2024/146579

(57) **Abstract**

Provided are a counterweight assembly, a piping system, and an air conditioner. The counterweight assembly is used for the piping system of the air conditioner. The counterweight assembly comprises a counterweight block and a fixing clip. The counterweight block has a clamping hole adapted to a pipe. The counterweight block has two separable ends in a circumferential direction of the clamping hole to define an openable slit. The slit is in communication with the clamping hole to allow the pipe to engage into the clamping hole through the slit. The counterweight block has a clamping groove formed on each of outer peripheral walls of the counterweight block at two sides of the slit in a circumferential direction. The clamping grooves are spaced apart from the slit. The fixing clip has clamping arms adapted to extend into the clamping grooves. The clamping arms are adapted to be cooperated with groove walls of the clamping grooves to open or close the slit.

## Description

This application claims priority to Chinese Patent Application No. 202320051242.8 filed on January 05, 2023 and entitled "COUNTERWEIGHT ASSEMBLY, PIPING SYSTEM, AND AIR CONDITIONER", the entire disclosure of which are incorporated herein by reference.

### FIELD

The present disclosure relates to the technical field of air conditioners, and in particular, to a counterweight assembly, a piping system, and an air conditioner.

### BACKGROUND

Currently, the use of household appliances such as air conditioners has become increasingly common. Since refrigerant needs to be delivered through an interior of an air conditioner via pipes, the interior of the air conditioner should have a piping system composed of many pipelines.

According to statistics, during production and assembly of the air conditioner, assembly of the piping system of the air conditioner is relatively time-consuming, with installation of a counterweight block on the pipe being one of the primary contributing factors. A conventional method for installing the counterweight block typically involves securing the counterweight block with cable ties. Assembly of the cable ties comprises three steps: placing, tying, and cutting. This lengthy procedure is the main reason for the low efficiency in counterweight block installation. Further, inconsistencies in the tightness of the cable ties due to variations in operators' strength can also compromise product reliability.

### SUMMARY

A main objective of the present disclosure is to provide a counterweight assembly, a piping system, and an air conditioner. By forming a clamping groove at each of two sides of a slit of a counterweight block, clamping arms of a fixing clip are press-fitted with groove walls of the clamping grooves, realizing opening and closing of the slit. In this way, it is possible to eliminate operation steps of cutting and tightening a cable tie, thereby improving assembly efficiency of the counterweight block and a pipe and installation consistency of the counterweight block.

To achieve the above objective, in a first aspect, embodiments of the present disclosure provide a counterweight assembly for a piping system of an air conditioner. The counterweight assembly comprises a counterweight block and a fixing clip. The counterweight block has a clamping hole. The clamping hole is adapted to a pipe. The counterweight block has two separable ends in a circumferential direction of the clamping hole to define an openable slit. The slit is in communication with the clamping hole to allow the pipe to engage into the clamping hole through the slit. The counterweight block has a clamping groove formed on each of outer peripheral walls of the counterweight block at two sides of the slit in a circumferential direction. The clamping grooves are spaced apart from the slit. The fixing clip has clamping arms adapted to extend into the clamping grooves. The clamping arms are adapted to be cooperated with groove walls of the clamping grooves to open or close the slit.

According to the counterweight assembly of the present disclosure, the opening and closing of the slit can be realized by forming the clamping grooves on the two sides of the slit of the counterweight block and engaging the clamping arms of the fixing clip with the groove walls of the clamping grooves. In this way, the counterweight block and the pipe can be conveniently assembled or disassembled. Compared to a solution in the related art where the cable tie is used to bind the counterweight block, this solution can eliminate inconsistencies in closure tightness of the slit of the counterweight block caused by operator-dependent force variations, thereby preventing unstable connection of the counterweight block onto the pipe. Therefore, installation uniformity of the counterweight block is enhanced while improving assembly efficiency of the counterweight block and the pipe by omitting tie-cutting and tightening steps, ultimately reducing installation time and boosting overall air conditioner reliability.

In some embodiments, the clamping groove is inwardly recessed from the outer wall of the counterweight block along a radial direction corresponding to the slit.

In some embodiments, a groove wall of the clamping groove on a side of the clamping groove close to the slit is a clamping surface. Clamping surfaces of the two clamping grooves are arranged to be opposite to each other in the circumferential direction of the counterweight block, and two clamping arms face towards and are press-fitted with the corresponding clamping surfaces respectively.

In some embodiments, at least part of the clamping surface in a radial direction of the clamping surface is at least partially recessed towards the slit in the circumferential direction of the counterweight block to form an engagement groove. The clamping arm is provided with an engagement protrusion adapted to the engagement groove. The engagement protrusion is adapted to be engaged into the engagement groove.

In some embodiments, the clamping groove further has an abutting surface located on an inner end of the clamping surface. An inner end of the clamping arm abuts against the abutting surface.

In some embodiments, the inner end of the clamping arm further has an extended flange located at an inner side of the engagement protrusion in a radial direction of the counterweight block. The extended flange extends away from the slit in the circumferential direction of the counterweight block and is attached with the abutting surface.

In some embodiments, the counterweight block is an elastic member; and the clamping arm has a barb formed on two ends of the clamping arm in an axial direction of the counterweight block. The barbs are adapted to be engaged with the groove walls of the two clamping grooves in the axial direction of the counterweight block.

In some embodiments, the fixing clip further comprises a connection portion located between two clamping arms. The connection portion has two ends respectively connected to the two clamping arms and faces towards the slit radially.

In a specific example, the fixing clip is further provided with at least one reinforcing rib extending in a circumferential direction of the counterweight block. The reinforcing rib spans the connection portion with two ends of the reinforcing rib extending to the clamping arms respectively.

In some embodiments, the reinforcing rib is formed by outward protrusions of the connection portion and inner walls of the two clamping arms.

According to some specific embodiments of the present disclosure, the counterweight block has an avoidance groove formed on the outer peripheral wall of the counterweight block. The avoidance groove extends through the counterweight block in an axial direction of the pipe. The avoidance groove is located at a side of the pipe facing away from the slit in a radial direction of the pipe, and the avoidance groove is configured to provide the counterweight block with a deformation space when opening the slit.

In a second aspect, embodiments of the present disclosure provide a piping system for an air conditioner. The piping system comprises the counterweight assembly as described according to the first aspect of the present disclosure and a pipe adapted to be engaged into the clamping hole of the counterweight block.

The piping system disclosed herein incorporates the counterweight assembly according to the above first aspect enables secure attachment of counterweight block to the pipe. Further, loading capacity of the pipe can be enhanced, and vibration of the pipe during operation of the entire air conditioner can be reduced. As a result, it is ensured that the pipe can be stably and reliably connected to different parts of the air conditioner. Meanwhile, it is helpful to simplify an assembly operation and improve the assembly efficiency.

In a third aspect, embodiments of the present disclosure provide an air conditioner. The air conditioner comprises the piping system as described according to the second aspect of the present disclosure.

The air conditioner disclosed herein incorporates providing the piping system as described in the above second aspect enables a stable connection between various components. Moreover, it is possible to improve the assembly efficiency of the entire machine, save the assembly time and labor cost, and ensure assembly consistency.

### BRIEF DESCRIPTION OF THE DRAWINGS

In order to clearly explain technical solutions according to the embodiments of the present disclosure or in the related art, drawings used in the description of the embodiments or the related art are briefly described below. Obviously, the drawings described below are merely some embodiments of the present disclosure. Based on these drawings, other drawings can be obtained by those of ordinary skill in the art without creative effort.
FIG. 1 is a schematic structural view of a counterweight assembly according to some embodiments of the present disclosure.
FIG. 2 is another schematic structural view of a counterweight assembly according to some embodiments of the present disclosure.
FIG. 3 is an exploded view of a counterweight assembly according to some embodiments of the present disclosure.
FIG. 4 is a schematic structural view of a fixing clip according to some embodiments of the present disclosure.
FIG. 5 is a schematic structural view of a fixing clip according to some embodiments of the present disclosure.

### Description of reference numerals:

100-counterweight assembly;
110-counterweight block; 111-clamping hole; 112- slit; 113-clamping groove; 114-clamping surface; 115-abutting surface; 116-engagement groove; 117-avoidance groove;
120-fixing clip; 121-clamping arm; 122-engagement protrusion; 123-extended flange; 124-barb; 125-connection portion; 126-reinforcing rib; 200-pipe.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are exemplary only, and are intended to explain, rather than limiting, the present disclosure.

Currently, the use of household appliances such as air conditioners has become increasingly common. Since refrigerant needs to be delivered through an interior of an air conditioner via pipes, the interior of the air conditioner should have a piping system composed of many pipelines.

According to statistics, during production and assembly of the air conditioner, assembly of the piping system of the air conditioner is relatively time-consuming, with installation of a counterweight block on the pipe being one of the primary contributing factors. A conventional method for installing the counterweight block typically involves securing the counterweight block with cable ties. Assembly of the cable ties comprises three steps: placing, tying, and cutting. This lengthy procedure is the main reason for the low efficiency in counterweight block installation. Further, inconsistencies in the tightness of the cable ties due to variations in operator's strength can also compromise product reliability.

In view of this, embodiments of the present disclosure provide a counterweight assembly, a piping system, and an air conditioner. By forming a clamping groove at each of two sides of a slit of a counterweight block, clamping arms of a fixing clip are press-fitted with groove walls of the clamping grooves, realizing opening and closing of the slit. In this way, it is possible to eliminate operation steps of cutting and tightening the cable tie, thereby improving assembly efficiency of the counterweight block and the pipe and installation consistency of the counterweight block.

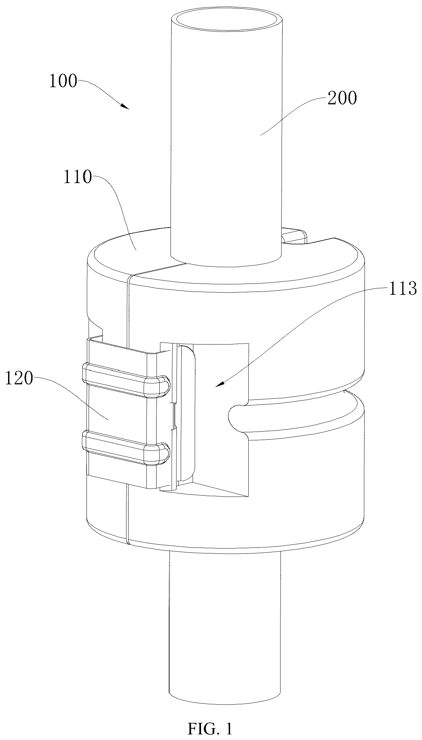

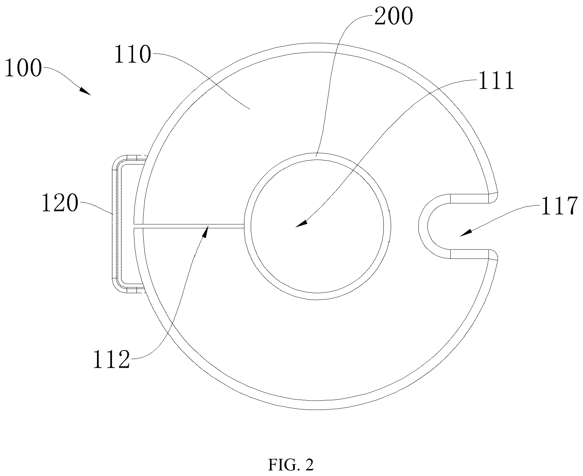

A counterweight assembly 100 according to embodiments of a first aspect of the present disclosure will be described below with reference to FIG. 1 to FIG. 5.

The counterweight assembly 100 according to the embodiments of the present disclosure may be used in a piping system of an air conditioner. That is, the counterweight assembly 100 may be connected to a pipe 200 of the piping system, to increase a loading capacity of the pipe 200 and reduce vibration of the pipe 200. The counterweight assembly 100 may comprise a counterweight block 110 and a fixing clip 120.

Referring to FIG. 1 to FIG. 3, the counterweight block 110 may be of a barrel-shaped form, such as a cylindrical barrel shape or a rectangular barrel shape. In other embodiments of the present disclosure, the counterweight block 110 may be reasonably constructed as desired. The counterweight block 110 has a clamping hole 111. The clamping hole 111 extends in an axial direction of the pipe 200 and is adapted to the pipe 200 of the piping system. For example, the clamping hole 111 may have a circular cross-section. Moreover, an inner diameter of the clamping hole 111 may be in an interference fit with an outer diameter of the pipe 200, to facilitate a stable connection of the counterweight block 110 to the pipe 200 and an increase in a weight of the pipe 200.

The counterweight block 110 may extend in a circumferential direction of the clamping hole 111 to surround the pipe 200. Two ends of the counterweight block 110 in the circumferential direction of the clamping hole 111 are capable of being engaged with each other in a separated manner. In this way, an openable slit 112 may be defined between end surfaces of the two ends of the counterweight block 110 in its own extending direction. In other words, an opening degree of the slit 112 is adjustable, and the slit 112 is in communication with the clamping hole 111. In this way, the pipe 200 may engage into the clamping hole 111 through the slit 112. For example, the counterweight block 110 has a first end and a second end in its own extending direction, and the first end and the second end are capable of being engaged with each other in a separated manner. When the end surface of the first end and the end surface of the second end are in contact with each other, the slit 112 is closed. In this case, the pipe 200 is stably clamped in the clamping hole 111. When the end surface of the first end and the end surface of the second end are separated from each other, the slit 112 is opened. In this case, the pipe 200 may engage into the clamping hole 111 through the slit 112 or be taken out from the clamping hole 111. Moreover, when a distance between the end surface of the first end and the end surface of the second end varies, the opening degree of the slit 112 also varies. It should be understood that an orientation of the slit 112 may be directed to a radial direction of the counterweight block 110. In other embodiments of the present disclosure, the orientation of the slit 112 may also be directed to other directions. The orientation of the slit 112 depends on configurations of the end surface of the first end and the end surface of the second end.

The counterweight block 110 has a clamping groove 113 formed on each of outer peripheral walls of the counterweight block 110 at two sides of the slit 112 in a circumferential direction. For example, the clamping groove 113 is inwardly recessed from the outer peripheral wall of the counterweight block 110. The clamping grooves 113 are spaced apart from the slit 112 in the circumferential direction of the counterweight block 110. The fixing clip 120 has two clamping arms 121. The two clamping arms 121 are adapted to extend into the corresponding clamping grooves 113. The two clamping arms 121 are adapted to be cooperated with groove walls of the clamping grooves 113 to open or close the slit 112.

When the counterweight assembly 100 of this embodiment is used to be connected to the pipe 200, the first end and the second end of the counterweight block 110 may be separated from each other to open the slit 112. Then, the pipe 200 engages into the clamping hole 111 through the slit 112. Thereafter, the first end and the second end are attached to each other. The two clamping arms 121 of the fixing clip 120 are extended into the clamping grooves 113 and are press-fitted with the groove walls. As a result, locking of the counterweight block 110 can be realized.

In the counterweight assembly 100 according to the embodiments of the present disclosure, the opening and closing of the slit 112 can be realized by forming the clamping grooves 113 on the two sides of the slit 112 of the counterweight block 110 and engaging the clamping arms 121 of the fixing clip 120 with the groove walls of the clamping grooves 113. In this way, the counterweight block 110 and the pipe 200 can be conveniently assembled or disassembled. Compared to a solution in the related art where the cable tie is used to bind the counterweight block 110, this solution can eliminate inconsistencies in closure tightness of the slit 112 of the counterweight block 110 caused by operator-dependent force variations, thereby preventing unstable connection of the counterweight block 110 onto the pipe 200. Therefore, installation uniformity of the counterweight block 110 is enhanced while improving assembly efficiency of the counterweight block 110 and the pipe 200 by omitting tie-cutting and tightening steps, ultimately reducing installation time and boosting overall air conditioner reliability.

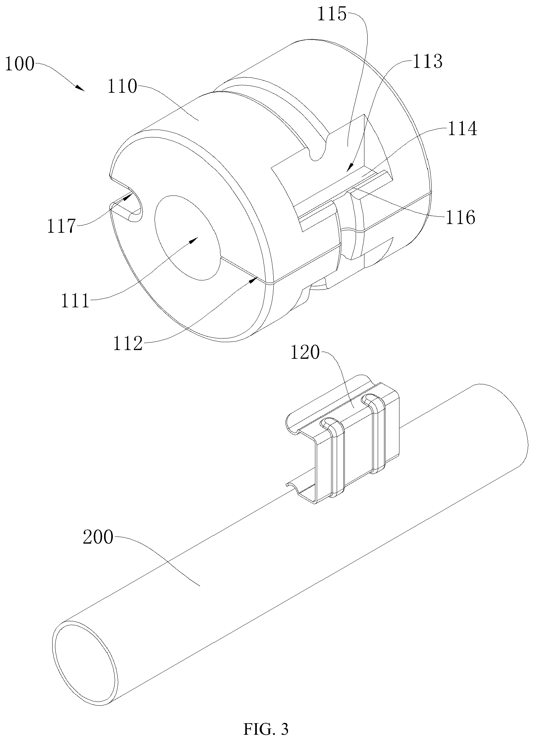

In some embodiments, referring to FIG. 3, the clamping groove 113 is inwardly recessed from an outer peripheral wall of the counterweight block 110 along a radial direction corresponding to the slit 112. For example, both the end surface of the first end and the end surface of the second end of the counterweight block 110 extend in the radial direction of the counterweight block 110. In this case, the orientation of the slit 112 of the clamping hole 111 is also be directed to the radial direction of the counterweight block 110, and the clamping groove 113 is inwardly recessed from the outer peripheral wall of the counterweight block 110 along the radial direction corresponding to the slit 112, which can ensure that groove walls of the two clamping grooves 113 on one side of the clamping groove 113 close to the slit 112 is approximately parallel to the end surfaces of the two ends of the counterweight block 110. Therefore, it is ensured that the fixing clip 120 may stably clamp the two groove walls.

In some embodiments, referring to FIG. 3, a groove wall of the clamping groove 113 on a side of the clamping groove 113 close to the slit 112 is a clamping surface 114. Clampingclamping surfaces 114 of the two clamping grooves 113 are arranged to be opposite to each other in the circumferential direction of the counterweight block 110. For example, the clamping surface 114 may be approximately parallel to the end surfaces of the two ends of the counterweight block 110 in the circumferential direction of the counterweight block 110. Two clamping arms 121 face towards and are press-fitted with the corresponding clamping surfaces 114 respectively. In this way, the two clamping arms 121 can apply a force directed to the slit 112 to their respective corresponding clamping surfaces 114, causing the counterweight block 110 to apply the two ends of the counterweight block 110 with forces directed to the two ends, thereby closing the slit 112.

In some embodiments, referring to FIG. 3, at least part of the clamping surface 114 in a radial direction of the clamping surface 114 is at least partially recessed towards the slit 112 in the circumferential direction of the counterweight block 110 to form an engagement groove 116. For example, the engagement groove 116 may be formed by recessing a part of the clamping surface 114 towards the slit 112 in the circumferential direction of the counterweight block 110, or the entire clamping surface 114 may be recessed towards a side of the slit 112. The clamping arm 121 is provided with an engagement protrusion 122 adapted to the engagement groove 116. The engagement protrusion 122 is adapted to be engaged into the engagement groove 116. In this way, it is possible to avoid a relative sliding movement between the clamping surface 114 and the clamping arm 121 in the orientation of the slit 112 of the clamping hole 111, which otherwise causes the fixing clip 120 to be disengaged from the counterweight block 110. In this way, engagement stability between the fixing clip 120 and the counterweight block 110 is further improved. Therefore, connection reliability between the counterweight block 110 and the pipe 200 is ensured.

In some embodiments, referring to FIG. 3, the clamping groove 113 further has an abutting surface 115 located on an inner end of the clamping surface 114. For example, both the end surface of the first end and the end surface of the second end of the counterweight block 110 extend in the radial direction of the counterweight block 110. In this case, the orientation of the slit 112 of the clamping hole 111 is also directed to the radial direction of the counterweight block 110. The abutting surface 115 may be approximately perpendicular to the radial direction corresponding to the slit 112. An inner end of the clamping arm 121 abuts against the abutting surface 115. This configuration ensures an adequate radial contact area between the clamping arm 121 and the clamping surface 114. Therefore, engagement stability between the clamping arm 121 and the clamping surface 114 is further improved.

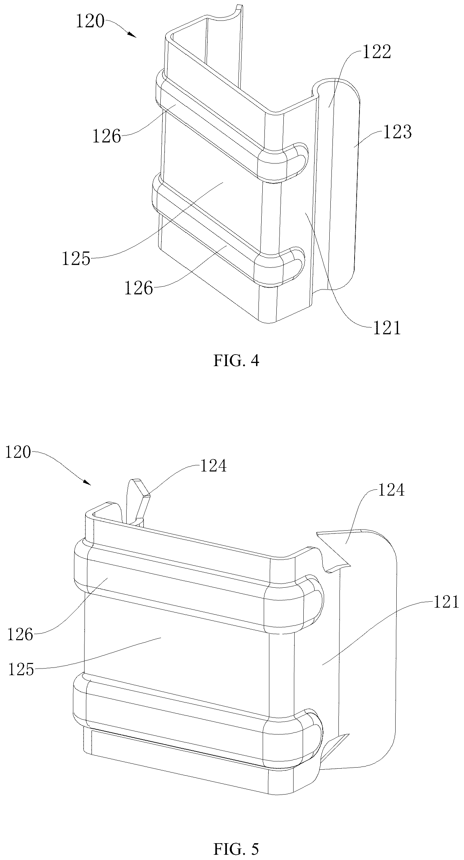

In some embodiments, referring to FIG. 4, the inner end of the clamping arm 121 further has an extended flange 123. The extended flange 123 is located at an inner side of the engagement protrusion 122 in a radial direction of the counterweight block 110. The extended flange 123 extends away from the slit 112 in the circumferential direction of the counterweight block 110 and is attached with the abutting surface 115. In this way, when the fixing clip 120 is removed from the counterweight block 110, the two clamping arms 121 may move outwardly from the extended flange 123 towards a side where the two clamping arms 121 move away from one other, causing the fixing clip 120 to be smoothly disengaged from the clamping groove 113.

In some embodiments, referring to FIG. 5, the counterweight block 110 is an elastic member. The clamping arm 121 has a barb 124 formed on two ends of the clamping arm 121 in an axial direction of the counterweight block 110. The barbs 124 are adapted to be engaged with the groove walls of the two clamping grooves 113 in the axial direction of the counterweight block 110. For example, each of an upper end surface and a lower end surface of the clamping arm 121 may be formed with one or more barbs 124. The barb 124 located at the upper end surface of the clamping arm 121 may extend upwards from the upper end surface and away from the clamping hole 111 radially. The barb 124 located at the lower end surface of the clamping arm 121 may extend downwards from the lower end surface and away from the clamping hole 111 radially. In this way, when the clamping arm 121 is engaged with the clamping surface 114 corresponding to the clamping arm 121, the barb 124 can be pressed against an upper groove wall or a lower groove wall of the clamping groove 113, causing the corresponding groove wall to deform to some extent. Therefore, the engagement stability between the fixing clip 120 and the counterweight block 110 is enhanced, and the clamping arm 121 is prevented from being disengaged from the clamping surface 114.

In some embodiments, referring to FIG. 4 and FIG. 5, the fixing clip 120 may further comprise a connection portion 125. In an exemplary embodiment of the present disclosure, the connection portion 125 is located between the two clamping arms 121. The connection portion 125 has two ends respectively connected to the two clamping arms 121. For example, each of the two ends of the connection portion 125 is connected to an end of each of the two clamping arms 121 away from the abutting surface 115. The connection portion 125 faces towards the slit 112 radially. In this way, the connection portion 125 can provide support for the two clamping arms 121. Meanwhile, an overall structure is simple and manufactured easily.

In an exemplary embodiment, referring to FIG. 4 and FIG. 5, the fixing clip 120 may be further provided with at least one reinforcing rib 126. For example, as shown in FIG. 5, the fixing clip 120 is provided with two reinforcing ribs 126. The two reinforcing ribs 126 may be spaced apart from each other in the axial direction of the counterweight block 110. The reinforcing rib 126 may extend in the circumferential direction of the counterweight block 110. The reinforcing rib 126 spans a surface of the connection portion 125. Moreover, two ends of the reinforcing rib 126 extend to the corresponding clamping arms 121, respectively. In this way, a structural strength of the connection portion 125 can be increased, and the connection portion 125 can be prevented from deforming and bending. In addition, a connection strength between the connection portion 125 and the clamping arm 121 can be increased, and a fracture between the clamping arm 121 and the connection portion 125 can be avoided.

In some embodiments, referring to FIG. 4 and FIG. 5, the reinforcing rib 126 is formed by outward protrusions of the connection portion 125 and inner walls of the two clamping arms 121. For example, the reinforcing rib 126 may be made through a stamping process. In this way, it is possible to increase elasticity of the clamping arm 121, simplify a structure of the fixing clip 120, and facilitate the manufacturing.

In some embodiments, referring to FIG. 3, the counterweight block 110 has an avoidance groove 117 formed on an outer peripheral wall of the counterweight block 110. The avoidance groove 117 may extend through the counterweight block 110 in an axial direction of the pipe 200. The avoidance groove 117 is located at a side of the clamping hole 111 facing away from the slit 112 in a radial direction of the clamping hole 111. In other words, the avoidance groove 117 may be inwardly recessed from the outer peripheral wall of the counterweight block 110 along the radial direction. Since the counterweight block 110 is integrally formed, when opening the slit 112, some components of the counterweight block 110 in the circumferential direction of the counterweight block 110 will be compressed and deformed to some extent. By forming the avoidance groove 117, a deformation space can be provided for the counterweight block 110 when opening the slit 112, which prevents the counterweight block 110 from being damaged or torn, and thus better protection can be provided for the counterweight block 110.

A piping system according to embodiments of a second aspect of the present disclosure will be described below with reference to FIG. 1 to FIG. 5.

The piping system according to the embodiments of the present disclosure may be used in an air conditioner. The piping system may comprise a pipe 200 and the counterweight assembly 100 as described in the above embodiments. In an exemplary embodiment of the present disclosure, the pipe 200 is adapted to be engaged into the clamping hole 111 of the counterweight block 110.

The piping system disclosed herein incorporates the counterweight assembly 100 according to the above embodiments enables secure attachment of the counterweight block 110 to the pipe 200. Further, loading capacity of the pipe 200 can be enhanced, and vibration of the pipe 200 during operation of the entire air conditioner can be reduced. As a result, it is ensured that the pipe 200 can be stably and reliably connected to different parts of the air conditioner. Meanwhile, it is helpful to simplify an assembly operation and improve the assembly efficiency.

An air conditioner according to embodiments of a third aspect of the present disclosure will be described below.

The air conditioner according to the embodiments of the present disclosure comprises the piping system as described in the above embodiments. For example, the air conditioner has an indoor unit, an outdoor unit, and a piping system. The indoor unit may be connected to the outdoor unit through the pipe 200 of the piping system. In other embodiments of the present disclosure, the present disclosure is not limited in this regard. The piping system may also be only the pipe 200 of the indoor unit, or only the pipe 200 of the outdoor unit.

The air conditioner disclosed herein incorporates providing the piping system as described in the above second aspect enables a stable connection between various components. Moreover, it is possible to improve the assembly efficiency of the entire machine, save the assembly time and labor cost, and ensure assembly consistency.

In the description of the present disclosure, it should to be understood that, orientation or position relationship indicated by terms such as "center", "longitudinal", "lateral", "length", "width", "thickness", "over", "below", "front", "back", "left", "right", "vertical", "horizontal", "top", "bottom", "in", "out", "clockwise", "anti-clockwise", "axial", "radial" and "circumferential" is based on the orientation or position relationship shown in the accompanying drawings, and is merely for the convenience of describing the present disclosure and simplifying the description, rather than indicating or implying that the associated device or element must have a specific orientation, or be constructed and operated in a specific orientation, and therefore cannot be understood as a limitation on the present disclosure.

In addition, the terms "first" and "second" are only used for descriptive purposes, and cannot be understood as indicating or implying relative importance or implicitly indicating the number of indicated technical features. Therefore, the features associated with "first" and "second" may explicitly or implicitly comprise at least one of the features. In the description of the present disclosure, "plurality of" means at least two, such as two, three, etc., unless otherwise specifically defined.

In the present disclosure, unless otherwise clearly specified and limited, terms such as "install", "connect", "connect to", "fix" and the like should be understood in a broad sense. For example, it may be a fixed connection, a detachable connection, or an integral connection; mechanical connection or electrical connection; direct connection or indirect connection through an intermediate; internal communication of two components or the interaction relationship between two components. For those of ordinary skill in the art, the specific meaning of the above-mentioned terms in the present disclosure can be understood according to specific circumstances.

In the present disclosure, unless expressly stipulated and defined otherwise, the first feature "on" or "under" the second feature may mean that the first feature is in direct contact with the second feature, or the first and second features are in indirect contact through an intermediate. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

In the description of this specification, descriptions with reference to the terms "an embodiment", "some embodiments", "examples", "specific examples", or "some examples" etc., mean that specific features, structure, materials or characteristics described in conjunction with the embodiment or example are comprised in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner. In addition, those skilled in the art can combine the different embodiments or examples and the features of the different embodiments or examples described in this specification without contradicting each other.

Although the embodiments of the present disclosure have been shown and described, it would be appreciated by those skilled in the art that the above embodiments are exemplary and cannot be construed as limiting the present disclosure, changes, modifications, substitutions, and variations can be made by those of ordinary skill in the art to the embodiments without departing from the scope of the present disclosure.

## Claims

1. A counterweight assembly for a piping system of an air conditioner, the counterweight assembly comprising:
a counterweight block having a clamping hole, the clamping hole being adapted to a pipe, the counterweight block having two separable ends in a circumferential direction of the clamping hole to define an openable slit, wherein the slit is in communication with the clamping hole to allow the pipe to engage into the clamping hole through the slit, and wherein the counterweight block has a clamping groove formed on each of outer peripheral walls of the counterweight block at two sides of the slit in a circumferential direction, the clamping grooves being spaced apart from the slit; and
a fixing clip having clamping arms adapted to extend into the clamping grooves, the clamping arms being adapted to be cooperated with groove walls of the clamping grooves to open or close the slit.

2. The counterweight assembly according to claim 1, wherein the clamping groove is inwardly recessed from the outer wall of the counterweight block along a radial direction corresponding to the slit.

3. The counterweight assembly according to claim 2, wherein a groove wall of the clamping groove on a side of the clamping groove close to the slit is a clamping surface, the clamping surfaces of the two clamping grooves being arranged to be opposite to each other in the circumferential direction of the counterweight block, and the two clamping arms facing towards and being press-fitted with the corresponding clamping surfaces respectively.

4. The counterweight assembly according to claim 3, wherein:
the clamping surface is at least partially recessed towards the slit to form an engagement groove; and
the clamping arm is provided with an engagement protrusion adapted to the engagement groove, the engagement protrusion being adapted to be engaged into the engagement groove.

5. The counterweight assembly according to claim 4, wherein the clamping groove further has an abutting surface located on an inner end of the clamping surface, an inner end of the clamping arm abutting against the abutting surface.

6. The counterweight assembly according to claim 5, wherein the inner end of the clamping arm further has an extended flange located at an inner side of the engagement protrusion in a radial direction of the counterweight block, the extended flange extending away from the slit in the circumferential direction of the counterweight block and being attached with the abutting surface.

7. The counterweight assembly according to any one of claims 1 to 6, wherein:
the counterweight block is an elastic member; and
the clamping arm has a barb formed on two ends of the clamping arm in an axial direction of the counterweight block, the barbs being adapted to be engaged with the groove walls of the two clamping grooves in the axial direction of the counterweight block.

8. The counterweight assembly according to any one of claims 1 to 6, wherein the fixing clip further comprises:
a connection portion located between the two clamping arms, wherein the connection portion has two ends respectively connected to the two clamping arms and faces towards the slit radially.

9. The counterweight assembly according to claim 8, wherein the fixing clip is further provided with at least one reinforcing rib extending in the circumferential direction of the counterweight block,
wherein the reinforcing rib spans the connection portion with two ends of the reinforcing rib extending to the clamping arms respectively.

10. The counterweight assembly according to claim 9, wherein the reinforcing rib is formed by outward protrusions of the connection portion and inner walls of the two clamping arms.

11. The counterweight assembly according to any one of claims 1 to 6, wherein the counterweight block has an avoidance groove formed on the outer peripheral wall of the counterweight block, the avoidance groove extending through the counterweight block in an axial direction of the pipe, the avoidance groove being located at a side of the pipe facing away from the slit in a radial direction of the pipe, and the avoidance groove being configured to provide the counterweight block with a deformation space when opening the slit.

12. A piping system for an air conditioner, the piping system comprising:
a counterweight assembly according to any one of claims 1 to 11; and
a pipe adapted to be engaged into a clamping hole of a counterweight block.

13. An air conditioner, comprising a piping system according to claim 12.
